(19) Europäisches Patentamt / European Patent Office / Office européen des brevets

(11) **EP 2 636 093 B1**

(12) **FASCICULE DE BREVET EUROPEEN**

(45) Date de publication et mention
de la délivrance du brevet:
**04.01.2017  Bulletin 2017/01**

(21) Numéro de dépôt: **11778883.6**

(22) Date de dépôt: **03.11.2011**

(51) Int Cl.:
*H01M 10/44* *(2006.01)*   *H01M 10/613* *(2014.01)*
*B60L 11/18* *(2006.01)*   *G01R 31/36* *(2006.01)*
*H02J 7/00* *(2006.01)*

(86) Numéro de dépôt international:
**PCT/EP2011/069351**

(87) Numéro de publication internationale:
**WO 2012/059551 (10.05.2012 Gazette 2012/19)**

(54) **PROCEDE DE CHARGE POUR UNE BATTERIE D'ALIMENTATION D'UN MOTEUR D'ENTRAINEMENT D'UN VEHICULE AUTOMOBILE**

AUFLADEVERFAHREN FÜR EINE BATTERIE ZUR STROMVERSORGUNG EINES ANTRIEBSMOTORS EINES KRAFTFAHRZEUGES

METHOD FOR CHARGING A BATTERY FOR SUPPLYING POWER TO A DRIVE MOTOR OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **05.11.2010  FR 1059121**

(43) Date de publication de la demande:
**11.09.2013  Bulletin 2013/37**

(73) Titulaire: **Renault S.A.S.**
**92100 Boulogne-Billancourt (FR)**

(72) Inventeurs:
• **ORIGUCHI, Masato**
  **F-78120 Rambouillet (FR)**
• **MARCHAL, Caroline**
  **F-78180 Montigny Le Bretonneux (FR)**

(56) Documents cités:
**EP-A1- 1 806 248     JP-A- 6 217 415
JP-A- 2002 352 866     JP-A- 2004 159 379
JP-A- 2006 073 406     JP-A- 2007 336 691
JP-A- 2010 233 360     US-B1- 6 215 281
US-B1- 6 624 615**

**Description**

La présente invention se rapporte à un procédé de charge d'une batterie, particulièrement adapté à la charge d'une batterie d'un véhicule automobile électrique. Elle porte aussi sur un chargeur et une station de recharge de batterie mettant en oeuvre un tel procédé.

Certains véhicules automobiles, comme les véhicules électriques ou hybrides, comprennent une batterie pour l'alimentation d'un moteur d'entraînement électrique. Une telle batterie nécessite régulièrement sa charge puisqu'elle se décharge lors de son utilisation.

Un procédé de charge d'une batterie est par exemple décrit dans le document US2009/0309546. Un tel procédé reste toutefois peu performant. Or, le temps total d'une phase de charge de batterie est un paramètre très important pour le développement en pratique du véhicule électrique. De plus, une phase de charge de batterie exige une installation particulière remplissant non seulement la fonction de charge mais aussi une fonction de refroidissement car la batterie s'échauffe pendant sa charge. Le refroidissement permet d'optimiser la durée de vie de la batterie et de fournir au client une batterie à une température suffisamment basse pour qu'il puisse profiter des performances maximales de la batterie sur son parcours. L'inconvénient des procédés de charge existants provient du fait qu'ils ne sont pas optimisés : notamment, la gestion du refroidissement de la batterie est indépendante de la gestion de sa charge, et il arrive des situations dans lesquelles la charge électrique est terminée mais la phase de charge se poursuit uniquement pour finaliser le refroidissement de la batterie. Dans un tel cas, le temps de charge est allongé pour la seule gestion du refroidissement, ce qui est non optimal.

Les documents US6624615B1, JP2002352866A et JP2006073406A constituent également des exemples de l'art antérieur.

Ainsi, il existe un besoin d'amélioration des procédés de charge de batteries et l'invention s'intéresse à l'optimisation des phases de charge des batteries d'entraînement de véhicules automobiles.

Plus particulièrement, un objet de l'invention est d'optimiser le temps de charge d'une batterie, tout en atteignant un état de charge finale et une température finale satisfaisantes.

A cet effet, l'invention repose sur un procédé de charge d'une batterie, caractérisé en ce qu'il comprend les étapes suivantes :

(E1) - détermination d'un état de charge final ($SOC_{end}$) et d'une température finale ($T_{end}$) de la batterie ;
(E2) - calcul de la puissance de charge ($P_{ch}$) et/ou de la puissance de refroidissement ($P_{cool}$) nécessaires pour atteindre les deux valeurs finales ($SOC_{end}$ ; $T_{end}$) dans un temps minimal.

L'étape (E2) peut définir un temps de charge permettant d'atteindre sensiblement en même temps l'état de charge final ($SOC_{end}$) et la température finale ($T_{end}$) de la batterie.

L'étape (E1) peut comprendre la détermination d'un état de charge final et d'une température finale de la batterie en fonction de tout ou partie des paramètres suivants :

- état de la station de charge mettant en oeuvre le procédé de charge ;
- état du chargeur mettant en oeuvre le procédé de charge ;
- état de la batterie à recharger.

L'étape (E2) peut considérer les équations suivantes :

$$\Delta T_{bat} = T_{end} - T_{ini} = \frac{(Q_{bat} - P_{cool})}{C_p} \times t_{ch} \qquad (1)$$

$$t_{ch} = \frac{\Delta SOC \times E_{bat}}{P_{ch}} \qquad (2)$$

$$P_{cool} = \frac{\left(\dfrac{T_{end} + T_{ini}}{2} - 5\right)}{Rth} \qquad (3)$$

$$Q_{bat} = R_{bat}\left(\frac{P_{ch}}{U_{nom}}\right)^2 \qquad (4)$$

Avec :

$T_{ini}$ : température de la batterie à chaque pas de temps [°C]
$SOC_{ini}$ : état de ch arg e SOC de la batterie
$C_p$ : capacité calorifique de la batterie [Wh /K]
$E_{bat}$ : énergie de la batterie [Wh]
Rth : résis tan ce thermique entre la batterie et l'air soufflé [K/W]
$R_{bat}$ : résistance électrique de la batterie [ohm]
$U_{bat}$ : tension de la batterie [V]
$U_{nom}$ : tension no min ale de la batterie
$Q_{bat}$ : ch arg e de la batterie
$P_{cool}$ : puissance de refroidissement pendant la charge [W]
$t_{ch}$ : temps de ch arg e res tan t [h]
$P_{ch}$ : puissance de ch arg e [W]
$P_{ch,max}$ : puissance maximale de charge [W]

Ces équations peuvent être résolues avant d'initier la charge de la batterie et/ou selon une période temporelle prédéterminée pendant la charge de la batterie.

La résistance thermique (Rth) du dispositif de refroidissement peut être fixe et l'étape (E2) peut calculer la puissance de charge ($P_{ch}$) en fonction de cette résistance thermique (Rth).

La puissance de charge peut être calculée par la formule suivante :

$$P_{ch} = \left(\frac{-B + \sqrt{\Delta}}{2A}\right)$$

Avec :

$$\Delta = B^2 - 4AC$$

$$\underbrace{\left[\Delta SOC \times E_{bat} \times R_{bat}\left(\frac{1}{U_{nom}}\right)^2\right]}_{A} \times P_{ch}{}^2 + \underbrace{(T_{ini} - T_{end}) \times C_p}_{B} \times P_{ch} + \underbrace{\Delta SOC \times E_{bat} \times \frac{\left(5 - \frac{T_{end} + T_{ini}}{2}\right)}{Rth}}_{C} = 0$$

Le procédé de charge d'une batterie peut de plus calculer une puissance de charge maximale ($P_{max}$) dépendant de la station de charge et de la batterie à charger.

La résistance thermique (Rth) du dispositif de refroidissement peut être variable et l'étape (E2) peut calculer cette résistance thermique (Rth) en fonction de la puissance de charge ($P_{ch}$).

La résistance thermique (Rth) peut être calculée par la formule suivante :

$$Rth = \frac{\dfrac{T_{end} + T_{ini}}{2} - 5}{R_{bat}\left(\dfrac{P_{ch}}{U_{avg}}\right)^2 - \dfrac{(T_{end} - T(t)) \times C_p \times P_{ch}}{\Delta SOC \times E_{bat}}}$$

Le procédé de charge d'une batterie peut de plus comprendre une étape de lecture de la température, de l'état de charge et de potentiels autres paramètres caractérisant l'état de la batterie et la communication du résultat au dispositif de charge.

L'invention porte aussi sur un chargeur pour batterie, comprenant un dispositif de charge électrique, qui délivre une puissance de charge ($P_{ch}$), caractérisé en ce qu'il comprend un dispositif de refroidissement, qui délivre une puissance de refroidissement ($P_{cool}$), une entrée pour recevoir un état de charge final ($SOC_{end}$) et une température finale ($T_{end}$) de la batterie et une unité de contrôle qui calcule la puissance de charge ($P_{ch}$) et/ou la puissance de refroidissement ($P_{cool}$) nécessaires pour atteindre les deux valeurs finales ($SOC_{end}$ ; $T_{end}$) dans un temps minimal.

Le dispositif de refroidissement peut comprendre un débit et/ou une température de fluide de refroidissement variable(s), de sorte à modifier la puissance de refroidissement en fonction de la puissance de charge.

Enfin, l'invention porte aussi sur une station de gestion de batteries d'alimentation d'un moteur d'entraînement d'un véhicule automobile, caractérisée en ce qu'elle comprend au moins une unité de contrôle qui met en oeuvre le procédé de charge décrit précédemment.

Ces objets, caractéristiques et avantages de la présente invention seront exposés en détail dans la description suivante d'un mode d'exécution particulier fait à titre non-limitatif en relation avec la figure jointe qui représente schématiquement un chargeur de batterie dans un mode d'exécution de l'invention.

Le concept de l'invention repose sur un procédé de charge dans lequel la puissance de charge et/ou la puissance de refroidissement sont calculées pour atteindre des valeurs recherchées en un temps optimal.

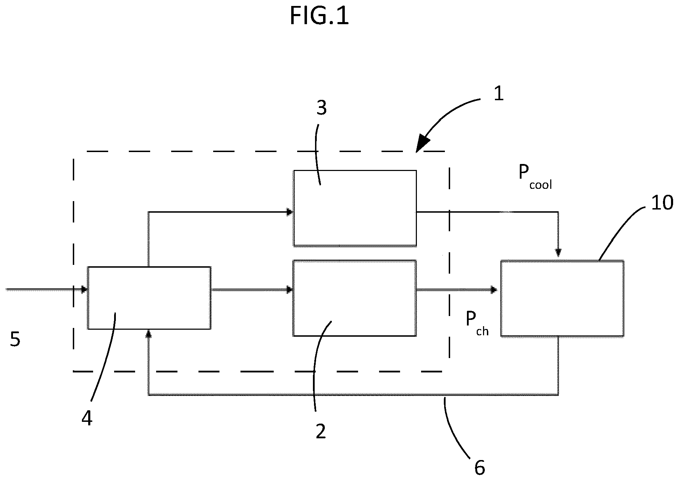

La figure 1 illustre schématiquement un chargeur 1 selon un mode d'exécution de l'invention, qui comprend un dispositif de charge électrique 2, qui délivre une puissance de charge $P_{ch}$, et un dispositif de refroidissement 3, qui délivre une puissance de refroidissement $P_{cool}$, à une batterie 10. Le dispositif comprend de plus une unité de contrôle 4 qui met en oeuvre un procédé de charge selon l'invention, qui va être décrit par la suite. Cette unité de contrôle comprend des moyens logiciels et/ou matériels, pour notamment déterminer les valeurs des puissances optimales $P_{ch}$ et $P_{cool}$, qui peuvent comprendre un calculateur. Pour cela, le chargeur 1 reçoit en entrée 5 la température finale recherchée $T_{end}$ de la batterie ainsi que l'état de la charge final souhaité $SOC_{end}$. Le dispositif comprend de plus des moyens de lecture de la température $T_{bat}$ et de la charge de la batterie $SOC_{bat}$, non représentés, dont les valeurs sont transmises à l'unité de contrôle 4, par un moyen de communication 6. Ces mesures peuvent être faites initialement, avant d'initier une phase de charge, puis éventuellement en cours de charge pour déterminer la fin de charge. Selon une réalisation avantageuse, ces mesures peuvent être répétées périodiquement et servir de base pour une régulation de la phase de charge, comme cela sera détaillé par la suite. Le moyen de communication 6 peut aussi permettre à la batterie 10 de transmettre à l'unité de contrôle 4 des données supplémentaires caractérisant l'état de la batterie, comme sa résistance électrique (soit directement soit via la tension et l'intensité), sa puissance de charge maximale admissible et son énergie utilisable par exemple. La lecture de ces données permet de remplacer dans le calcul les données de référence préalablement stockées sur l'élément 4 par les valeurs lues en temps réel.

L'unité de contrôle 4 met en oeuvre un calcul des puissances optimales $P_{ch}$ et $P_{cool}$ en fonction des valeurs finales souhaitées, qui représentent des valeurs de consigne, de l'état initial de la batterie, ainsi que des paramètres intrinsèques de la batterie et des caractéristiques du dispositif de refroidissement. A cet effet, l'unité de contrôle 4 stocke les informations de résistance thermique batterie Rth (potentiellement une cartographie en fonction de la plage de débit disponible en station) ainsi que l'information de capacité calorifique batterie.

Par exemple, pour une consigne de charge finale $SOC_{end}$ égale à 100% et un système de refroidissement à débit de fluide de refroidissement constant, caractérisé par exemple par une résistance thermique constante entre de l'air soufflé à 5° C et la batterie (considérée ici isolée), l'unité de contrôle 4 peut résoudre les équations suivantes :

$$\Delta T_{bat} = T_{end} - T_{ini} = \frac{(Q_{bat} - P_{cool})}{C_p} \times t_{ch} \qquad (1)$$

$$t_{ch} = \frac{\Delta SOC \times E_{bat}}{P_{ch}} \qquad (2)$$

$$P_{cool} = \frac{\left(\dfrac{T_{end} + T_{ini}}{2} - 5\right)}{Rth} \qquad (3)$$

$$Q_{bat} = R_{bat} \left( \frac{P_{ch}}{U_{nom}} \right)^2 \qquad\qquad (4)$$

$$\Delta T_{bat} \times C_p \times P_{ch} = \Delta SOC \times E_{bat} \times (Q_{bat} - P_{cool}) \qquad (5)$$

$$\left( T_{end} - T_{ini} \right) \times C_p \times P_{ch} = \Delta SOC \times E_{bat} \times \left( R_{bat} \left( \frac{P_{ch}}{U_{nom}} \right)^2 - \frac{\left( \frac{T_{end} + T_{ini}}{2} - 5 \right)}{Rth} \right) \qquad (6)$$

L'équation précédente peut aussi s'écrire sous la forme suivante, comme un polynôme de second ordre dans lequel l'inconnue est la puissance de charge $P_{ch}$ :

$$\underbrace{\left[ \Delta SOC \times E_{bat} \times R_{bat} \left( \frac{1}{U_{nom}} \right)^2 \right]}_{A} \times P_{ch}^2 + \underbrace{\left( T_{ini} - T_{end} \right) \times C_p \times P_{ch}}_{B} + \underbrace{\Delta SOC \times E_{bat} \times \frac{\left( 5 - \frac{T_{end} + T_{ini}}{2} \right)}{Rth}}_{C} = 0$$

On résout cette équation en définissant :

$$\Delta = B^2 - 4AC$$

Finalement, la valeur finale retenue pour la puissance de charge est la valeur donnée par la résolution du système d'équation précédent si elle est inférieure à la valeur maximale de la puissance de charge autorisée par la batterie et le chargeur, ou cette valeur maximale dans les autres cas

$$P_{ch} = min \left( P_{ch,max}, \frac{-B + \sqrt{\Delta}}{2A} \right)$$

Avec :

$T_{ini}$ : température de la batterie à chaque pas de temps [°C]
$SOC_{ini}$ : état de ch arg e SOC de la batterie
$C_p$ : capacité calorifique de la batterie [Wh /K]
$E_{bat}$ : énergie de la batterie [Wh]
Rth : résis tan ce thermique entre la batterie et l'air soufflé [K/W]
$R_{bat}$ : résistance électrique de la batterie [ohm]
$U_{bat}$ : tension de la batterie [V]
$U_{nom}$ : tension no min ale de la batterie
$Q_{bat}$ : ch arg e de la batterie
$P_{cool}$ : puissance de refroidissement pendant la ch arg e [W]
$t_{ch}$ : temps de ch arg e res tan t [h]
$P_{ch}$ : puissance de ch arg e [W]

$P_{ch,max}$ : puissance maximale de ch arg e [W]

Les équations (1), (3) et (4) caractérisent l'échange thermique mis en oeuvre par le dispositif de refroidissement 3 de la batterie et l'équation (2) caractérise la charge électrique de la batterie, mise en oeuvre par le dispositif de charge 2.

L'équation (5) est obtenue en combinant les équations (1) et (2) puis l'équation (6) est obtenue en combinant les équations (5), (3) et (4).

Ensuite, à partir de la valeur de la puissance de charge telle que définie ci-dessus, il est facile de calculer la puissance de refroidissement $P_{cool}$ et le temps de charge $t_{ch}$.

En remarque, les équations précédentes sont résolues avant le début d'une phase de charge. Toutefois, elles peuvent aussi être résolues en cours de charge, selon une période prédéfinie à un pas de temps donné, en tenant compte des mesures réelles effectuées pour la température et l'état de charge de la batterie, afin de réajuster la puissance de charge et de refroidissement au cours de la charge, et de ne pas être dépendant d'une erreur de mesure temporaire. Dans cette résolution des équations en cours de charge, la puissance nominale $U_{nom}$ de l'équation (4) sera remplacée par une tension moyenne $U_{avg}$, par exemple obtenue à partir d'une cartographie fonction de l'état de charge SOC, de la charge restant à charger, et de la puissance de charge en cours. De plus, les valeurs initiales pour la température et l'état de charge seront remplacées par les valeurs mesurées, ou en variante estimées, à l'instant t. Lorsque ces équations sont ainsi mises en oeuvre en cours de la charge, le procédé met en oeuvre une régulation des puissances de charge et de refroidissement pour atteindre les valeurs finales recherchées, qui sont des valeurs de consigne de la régulation.

La température finale recherchée peut dépendre de certaines conditions particulières de la station de charge, selon le stock de batteries disponibles par exemple. Des cartographies de valeurs de température finale peuvent être prédéfinies.

En variante, le dispositif de refroidissement 3 de la batterie peut offrir une résistance thermique variable, par ajustement du débit et/ou de la température d'air soufflé de refroidissement. Dans ce cas, les équations précédentes permettent de déterminer la résistance thermique optimale à chaque instant en fonction de la puissance de charge de la batterie, selon la formule suivante :

$$Rth = \frac{\dfrac{T_{end} + T_{ini}}{2} - 5}{R_{bat}\left(\dfrac{P_{ch}}{U_{avg}}\right)^2 - \dfrac{(T_{end} - T(t)) \times C_p \times P_{ch}}{\Delta SOC \times E_{bat}}}$$

Pour obtenir la valeur de résistance thermique voulue, soit la température de la source froide, soit le débit est modifié.

La puissance de charge peut alors être une puissance fixe, dépendant des limitations de la station de charge et de la batterie. Le dispositif de refroidissement fait alors par exemple varier le débit d'air de refroidissement pour atteindre la valeur de résistance thermique Rth calculée, à partir par exemple d'une cartographie de Rth en fonction du débit d'air.

Finalement, le procédé de charge selon l'invention permet de calculer la puissance de charge et de refroidissement de la batterie afin d'obtenir les valeurs d'état de charge électrique et de température finaux prédéfinis, dans un temps minimal. Notamment, le procédé garantit d'atteindre la température finale recherchée avant ou en même temps que la charge électrique recherchée. Ces valeurs finales sont des paramètres du système et différentes valeurs peuvent être choisies, en fonction de l'état de la batterie, de l'état de la station de charge, etc. Une cartographie de températures finales peut être intégrée au chargeur pour prendre en compte son activité (pic d'activité, période creuse) en donnée d'entrée.

Ainsi, le procédé de charge d'une batterie selon l'invention comprend les deux étapes E1, E2 essentielles suivantes :

E1 - détermination d'un état de charge final $SOC_{end}$ et d'une température finale $T_{end}$ de la batterie ;
E2 - calcul de la puissance de charge $P_{ch}$ et/ou de la puissance de refroidissement $P_{cool}$ optimales pour atteindre les deux valeurs finales $SOC_{end}$ ; $T_{end}$ dans un temps optimal.

L'invention porte aussi sur une station de charge de batteries, utilisant un ou plusieurs chargeurs tel(s) que décrit(s) ci-dessus. En variante, différents chargeurs de batteries pourraient partager la même unité de contrôle 4.

L'invention a été décrite pour la charge d'une batterie d'un véhicule automobile. En remarque, elle peut être mise en oeuvre pour des batteries démontables, permettant par exemple d'échanger une batterie vide contre une batterie pleine, la batterie vide étant par la suite rechargée indépendamment. Dans un tel cas, la station devra gérer un stock de batteries pleines et vides, et peut adapter les paramètres de charge en fonction de l'état de son stock, en faisant en sorte par exemple d'accélérer les charges, par une diminution des exigences sur l'état de charge final et/ou la température finale, si son stock de batteries pleines est réduit. En variante, le procédé de charge peut être mis en oeuvre sur des batteries positionnées au sein d'un véhicule automobile. En remarque, l'invention s'applique à toute charge de batteries, n'est pas limitée au domaine automobile.

D'autre part, le procédé de charge de l'invention est compatible avec tout dispositif de refroidissement, quelque soit le principe de refroidissement mis en oeuvre, et de même pour tout dispositif de charge électrique. Enfin, les équations (1) à (4) précédentes ont été données à titre d'exemple, le principe de l'invention s'applique toujours pour tout autre système d'équation caractérisant la charge électrique et le refroidissement d'une batterie.

**Revendications**

1. Procédé de charge d'une batterie (10), **caractérisé en ce qu'**il comprend les étapes suivantes :

(E1) - détermination d'un état de charge final ($SOC_{end}$) et d'une température finale ($T_{end}$) de la batterie ;
(E2) - calcul de la puissance de charge ($P_{ch}$) et/ou de la puissance de refroidissement ($P_{cool}$) nécessaires pour atteindre les deux valeurs finales ($SOC_{end}$ ; $T_{end}$) dans un temps minimal, en considérant les équations suivantes :

$$\Delta T_{bat} = T_{end} - T_{ini} = \frac{\left(Q_{bat} - P_{cool}\right)}{C_p} \times t_{ch} \qquad (1)$$

$$t_{ch} = \frac{\Delta SOC \times E_{bat}}{P_{ch}} \qquad (2)$$

$$P_{cool} = \frac{\left(\frac{T_{end} + T_{ini}}{2} - 5\right)}{Rth} \qquad (3)$$

$$Q_{bat} = R_{bat}\left(\frac{P_{ch}}{U_{nom}}\right)^2 \qquad (4)$$

Avec :

$T_{ini}$ : température de la batterie à chaque pas de temps [°C]
$SOC_{ini}$ : état de ch arg e SOC de la batterie
$C_p$ : capacité calorifique de la batterie [Wh / K]
$E_{bat}$ : énergie de la batterie [Wh]
$Rth$ : résistance thermique entre la batterie et l'air soufflé [K/W]
$R_{bat}$ : résistance électrique de la batterie [ohm]
$U_{bat}$ : tension de la batterie [V]
$U_{nom}$ : tension no min ale de la batterie
$Q_{bat}$ : ch arg e de la batterie
$P_{cool}$ : puissance de refroidissement pendant la charge [W]
$t_{ch}$ : temps de ch arg e res tan t [h]
$P_{ch}$ : puissance de ch arg e [W]
$P_{ch,max}$ : puissance maximale de charge [W]

2. Procédé de charge d'une batterie (10) selon la revendication précédente, **caractérisé en ce que** l'étape (E2) définit un temps de charge permettant d'atteindre en même temps l'état de charge final (SOC$_{end}$) et la température finale (T$_{end}$) de la batterie.

3. Procédé de charge d'une batterie (10) selon l'une des revendications précédentes, **caractérisé en ce que** l'étape (E1) comprend la détermination d'un état de charge final et d'une température finale de la batterie en fonction de tout ou partie des paramètres suivants :

    - état de la station de charge mettant en oeuvre le procédé de charge ;
    - état du chargeur mettant en oeuvre le procédé de charge ;
    - état de la batterie à recharger.

4. Procédé de charge d'une batterie (10) selon la revendication 1, **caractérisé en ce que** ces équations sont résolues avant d'initier la charge de la batterie et/ou selon une période temporelle prédéterminée pendant la charge de la batterie.

5. Procédé de charge d'une batterie (10) selon l'une des revendications précédentes, **caractérisé en ce que** la résistance thermique (Rth) du dispositif de refroidissement (3) est fixe et **en ce que** l'étape (E2) calcule la puissance de charge (P$_{ch}$) en fonction de cette résistance thermique (Rth).

6. Procédé de charge d'une batterie (10) selon les revendications 1 et 5, **caractérisé en ce que** la puissance de charge est calculée par la formule suivante :

$$P_{ch} = \left( \frac{-B + \sqrt{\Delta}}{2A} \right)$$

Avec :

$$\Delta = B^2 - 4AC$$

$$\underbrace{\left[ \Delta SOC \times E_{bat} \times R_{bat} \left( \frac{1}{U_{nom}} \right)^2 \right]}_{A} \times P_{ch}^2 + \underbrace{(T_{ini} - T_{end}) \times C_p}_{B} \times P_{ch} + \underbrace{\Delta SOC \times E_{bat} \times \frac{\left( 5 - \frac{T_{end} + T_{ini}}{2} \right)}{Rth}}_{C} = 0$$

7. Procédé de charge d'une batterie (10) selon la revendication précédente, **caractérisé en ce qu'**il calcule une puissance de charge maximale (P$_{max}$) dépendant de la station de charge et de la batterie à charger.

8. Procédé de charge d'une batterie (10) selon l'une des revendications 1-4, 6 et 7 **caractérisé en ce que** la résistance thermique (Rth) du dispositif de refroidissement (3) est variable et **en ce que** l'étape (E2) calcule cette résistance thermique (Rth) en fonction de la puissance de charge (P$_{ch}$).

9. Procédé de charge d'une batterie (10) selon les revendications 1 et 8, **caractérisé en ce que** la résistance thermique (Rth) est calculée par la formule suivante :

$$Rth = \frac{\frac{T_{end} + T_{ini}}{2} - 5}{R_{bat} \left( \frac{P_{ch}}{U_{avg}} \right)^2 - \frac{(T_{end} - T(t)) \times C_p \times P_{ch}}{\Delta SOC \times E_{bat}}}$$

avec $U_{avg}$: tension moyenne de la batterie et $T(t)$: température de la batterie à l'instant t.

**10.** Procédé de charge d'une batterie (10) selon l'une des revendications précédentes, **caractérisé en ce qu'**il comprend une étape de lecture de la température, de l'état de charge et de potentiels autres paramètres caractérisant l'état de la batterie et la communication du résultat au dispositif de charge.

**11.** Chargeur pour batterie, comprenant un dispositif de charge électrique (2), qui délivre une puissance de charge ($P_{ch}$), **caractérisé en ce qu'**il comprend un dispositif de refroidissement (3), qui délivre une puissance de refroidissement ($P_{cool}$), une entrée (5) pour recevoir un état de charge final ($SOC_{end}$) et une température finale ($T_{end}$) de la batterie et une unité de contrôle (4) qui met en oeuvre le procédé de charge selon l'une des revendications 1 à 10 pour calculer la puissance de charge ($P_{ch}$) et/ou la puissance de refroidissement ($P_{cool}$) nécessaires pour atteindre les deux valeurs finales ($SOC_{end}$ ; $T_{end}$) dans un temps minimal.

**12.** Chargeur pour batterie selon la revendication précédente, **caractérisé en ce que** le dispositif de refroidissement (3) comprend un débit et/ou une température de fluide de refroidissement variable(s), de sorte à modifier la puissance de refroidissement en fonction de la puissance de charge.

**13.** Station de gestion de batteries d'alimentation d'un moteur d'entraînement d'un véhicule automobile, **caractérisée en ce qu'**elle comprend au moins une unité de contrôle (4) qui met en oeuvre le procédé de charge selon l'une des revendications 1 à 10.

**Patentansprüche**

**1.** Verfahren zum Aufladen einer Batterie (10), **dadurch gekennzeichnet, dass** es die folgenden Schritte aufweist:

(E1) - Bestimmen eines endgültigen Ladezustands ($SOC_{end}$) und einer Endtemperatur ($T_{end}$) der Batterie;
(E2) - Berechnen der Ladeleistung ($P_{ch}$) und/oder der Kühlleistung ($P_{cool}$), die erforderlich sind, um die beiden Endwerte ($SOC_{end}$; $T_{end}$) in kürzester Zeit zu erreichen, indem die folgenden Gleichungen berücksichtigt werden:

$$\Delta T_{bat} = T_{end} - T_{ini} = \frac{(Q_{bat} - P_{cool})}{C_p} \times t_{ch} \qquad (1)$$

$$t_{ch} = \frac{\Delta SOC \times E_{bat}}{P_{ch}} \qquad (2)$$

$$P_{cool} = \frac{\left(\frac{T_{end} + T_{ini}}{2} - 5\right)}{Rth} \qquad (3)$$

$$Q_{bat} = R_{bat}\left(\frac{P_{ch}}{U_{nom}}\right)^2 \qquad (4)$$

mit:

$T_{ini}$ : Temperatur der Batterie bei jedem Zeitschritt [°C]
$SOC_{ini}$: Ladezustand SOC der Batterie
$C_p$: Wärmekapazität der Batterie [Wh/K]
$E_{bat}$: Energie der Batterie [Wh]
Rth: Wärmewiderstand zwischen der Batterie und der Blasluft [K/W]
$R_{bat}$: elektrischer Widerstand der Batterie [Ohm]
$U_{bat}$: Batteriespannung [V]
$U_{nom}$: Nennspannung der Batterie

$Q_{bat}$: Aufladen der Batterie
$P_{cool}$: Kühlleistung während des Aufladens [W]
$t_{ch}$: verbleibende Ladezeit [h]
$P_{ch}$: Ladeleistung [W]
$P_{ch,max}$: maximale Ladeleistung [W]

2. Verfahren zum Aufladen einer Batterie (10) nach dem vorhergehenden Anspruch, **dadurch gekennzeichnet, dass** der Schritt (E2) eine Ladezeit definiert, die ermöglicht, zugleich den endgültigen Ladezustand ($SOC_{end}$) und die Endtemperatur ($T_{end}$) der Batterie zu erreichen.

3. Verfahren zum Aufladen einer Batterie (10) nach einem der vorhergehenden Ansprüche, **dadurch gekennzeichnet, dass** der Schritt (E1) das Bestimmen eines endgültigen Ladezustands und einer Endtemperatur der Batterie in Abhängigkeit von allen oder einem Teil der folgenden Parameter aufweist:

   - Zustand der Ladestation, die das Verfahren zum Aufladen durchführt;
   - Zustand des Ladegerätes, das das Verfahren zum Aufladen durchführt;
   - Zustand der aufzuladenden Batterie.

4. Verfahren zum Aufladen einer Batterie (10) nach Anspruch 1, **dadurch gekennzeichnet, dass** diese Gleichungen vor dem Beginn des Aufladens der Batterie und/oder nach einer vorgegebenen Zeitdauer während des Aufladens der Batterie gelöst werden.

5. Verfahren zum Aufladen einer Batterie (10) nach einem der vorhergehenden Ansprüche, **dadurch gekennzeichnet, dass** der Wärmewiderstand (Rth) der Kühlvorrichtung (3) fest ist und dass der Schritt (E2) die Ladeleistung ($P_{ch}$) in Abhängigkeit von diesem Wärmewiderstand (Rth) berechnet.

6. Verfahren zum Aufladen einer Batterie (10) nach den Ansprüchen 1 und 5, **dadurch gekennzeichnet, dass** die Ladeleistung durch die folgende Formel berechnet wird:

$$P_{ch} = \left( \frac{-B + \sqrt{\Delta}}{2A} \right)$$

Avec :

$$\Delta = B^2 - 4AC$$

$$\underbrace{\left[ \Delta SOC \times E_{bat} \times R_{bat} \left( \frac{1}{U_{nom}} \right)^2 \right]}_{A} \times P_{ch}^2 + \underbrace{(T_{ini} - T_{end}) \times C_p}_{B} \times P_{ch} + \underbrace{\Delta SOC \times E_{bat} \times \frac{\left( 5 - \frac{T_{end} + T_{ini}}{2} \right)}{Rth}}_{C} = 0$$

(Avec = mit)

7. Verfahren zum Aufladen einer Batterie (10) nach dem vorhergehenden Anspruch, **dadurch gekennzeichnet, dass** es eine maximale Ladeleistung ($P_{max}$) berechnet, die von der Ladestation und der aufzuladenden Batterie abhängt.

8. Verfahren zum Aufladen einer Batterie (10) nach einem der Ansprüche 1-4, 6 und 7, **dadurch gekennzeichnet, dass** der Wärmewiderstand (Rth) der Kühlvorrichtung (3) variabel ist und dass der Schritt (E2) diesen Wärmewiderstand (Rth) in Abhängigkeit von der Ladeleistung ($P_{ch}$) berechnet.

9. Verfahren zum Aufladen einer Batterie (10) nach den Ansprüchen 1 und 8, **dadurch gekennzeichnet, dass** der Wärmewiderstand (Rth) durch die folgende Formel berechnet wird:

$$Rth = \frac{\dfrac{T_{end} + T_{ini}}{2} - 5}{R_{bat}\left(\dfrac{P_{ch}}{U_{avg}}\right)^2 - \dfrac{(T_{end} - T(t)) \times C_p \times P_{ch}}{\Delta SOC \times E_{bat}}}$$

wobei $U_{avg}$: die mittlere Batteriespannung und $T(t)$ : die Temperatur der Batterie zu dem Zeitpunkt t ist.

10. Verfahren zum Aufladen einer Batterie (10) nach einem der vorhergehenden Ansprüche, **dadurch gekennzeichnet, dass** es einen Schritt des Ablesens der Temperatur, des Ladezustands und von möglichen anderen Parametern, die den Zustand der Batterie kennzeichnen, und das Mitteilen des Ergebnisses an die Ladevorrichtung aufweist.

11. Batterieladegerät, umfassend eine elektrische Ladevorrichtung (2), die eine Ladeleistung ($P_{ch}$) abgibt, **dadurch gekennzeichnet, dass** es eine Kühlvorrichtung (3), die eine Kühlleistung ($P_{cool}$) abgibt, einen Eingang (5), um einen endgültigen Ladezustand ($SOC_{end}$) und eine Endtemperatur ($T_{end}$) der Batterie zu empfangen, und eine Steuereinheit (4) aufweist, die das Verfahren zum Aufladen nach einem der Ansprüche 1 bis 10 durchführt, um die Ladeleistung ($P_{ch}$) und/oder die Kühlleistung ($P_{cool}$) zu berechnen, die notwendig sind, um die zwei Endwerte ($SOC_{end}$; $T_{end}$) in kürzester Zeit zu erreichen.

12. Batterieladegerät nach dem vorhergehenden Anspruch, **dadurch gekennzeichnet, dass** die Kühlvorrichtung (3) einen variablen Durchsatz und/oder eine variable Temperatur des Kühlfluids derart aufweist, um die Kühlleistung in Abhängigkeit von der Ladeleistung zu ändern.

13. Managementstation von Versorgungsbatterien eines Antriebsmotors eines Kraftfahrzeugs, **dadurch gekennzeichnet, dass** sie mindestens eine Steuereinheit (4) aufweist, die das Verfahren zum Aufladen nach einem der Ansprüche 1 bis 10 durchführt.

**Claims**

1. Method for charging a battery (10), **characterized in that** it comprises the following steps:

(E1) - determination of a final state of charge ($SOC_{end}$) and a final temperature ($T_{end}$) of the battery;
(E2) - computation of the charging power ($P_{ch}$) and/or of the cooling power ($P_{cool}$) necessary for reaching the two final values ($SOC_{end}$; $T_{end}$) in a minimum time, considering the following equations:

$$\Delta T_{bat} = T_{end} - T_{ini} = \frac{(Q_{bat} - P_{cool})}{C_p} \times t_{ch} \qquad (1)$$

$$t_{ch} = \frac{ASOC \times E_{bat}}{P_{ch}} \qquad (2)$$

$$P_{cool} = \frac{\left(\dfrac{T_{end} + T_{ini}}{2} - 5\right)}{Rth} \qquad (3)$$

$$Q_{bat} = R_{bat}\left(\frac{P_{ch}}{U_{nom}}\right)^2 \qquad (4)$$

where:

$T_{ini}$: temperature of the battery in each time frame [°C]
$SOC_{ini}$: state of charge SOC of the battery
$C_p$: calorific capacity of the battery [Wh/K]
$E_{bat}$: energy of the battery [Wh]
Rth: thermal resistance between the battery and
the blown air [K/W]
$R_{bat}$: electrical resistance of the battery [ohm]
$U_{bat}$: voltage of the battery [V]
$U_{nom}$: nominal voltage of the battery
$Q_{bat}$: charge of the battery
$P_{cool}$: cooling power during charging [W]
$t_{ch}$: charging time remaining [h]
$P_{ch}$: charging power [W]
$P_{ch,max}$: maximum charging power [W]

2.  Method for charging a battery (10) according to the preceding claim, **characterized in that** the step (E2) defines a charging time making it possible to reach, in substantially the same time, the final state of charge ($SOC_{end}$) and the final temperature ($T_{end}$) of the battery.

3.  Method for charging a battery (10) according to one of the preceding claims, **characterized in that** the step (E1) comprises the determination of a final state of charge and of a final temperature of the battery as a function of some or all of the following parameters:

    - state of the charging station using the charging method;
    - state of the charger using the charging method;
    - state of the battery to be recharged.

4.  Method for charging a battery (10) according to Claim 1, **characterized in that** these equations are resolved before initiating the charging of the battery and/or over a predetermined time period during the charging of the battery.

5.  Method for charging a battery (10) according to one of the preceding claims, **characterized in that** the thermal resistance (Rth) of the cooling device (3) is fixed and **in that** the step (E2) computes the charging power ($P_{ch}$) as a function of this thermal resistance (Rth).

6.  Method for charging a battery (10) according to Claims 1 and 5, **characterized in that** the charging power is computed by the following formula:

$$P_{ch} = \left( \frac{-B + \sqrt{\Delta}}{2A} \right)$$

where:

$$\Delta = B^2 - 4AC$$

$$\underbrace{\left[ \Delta SOC \times E_{bat} \times R_{bat} \left( \frac{1}{U_{nom}} \right)^2 \right]}_{A} \times P_{ch}^2 + \underbrace{(T_{ini} - T_{end}) \times C_p \times P_{ch}}_{B} + \underbrace{\Delta SOC \times E_{bat} \times \frac{\left( 5 - \frac{T_{end} + T_{ini}}{2} \right)}{Rth}}_{C} = 0$$

7.  Method for charging a battery (10) according to the preceding claim, **characterized in that** it computes a maximum charging power ($P_{max}$) dependent on the charging station and on the battery to be charged.

8. Method for charging a battery (10) according to one of Claims 1 to 4, 6 and 7, **characterized in that** the thermal resistance (Rth) of the cooling device (3) is variable and **in that** the step (E2) computes this thermal resistance (Rth) as a function of the charging power ($P_{ch}$).

9. Method for charging a battery (10) according to Claims 1 and 8, **characterized in that** the thermal resistance (Rth) is computed by the following formula:

$$Rth = \frac{\dfrac{T_{end} + T_{ini}}{2} - 5}{R_{bat}\left(\dfrac{P_{ch}}{U_{avg}}\right)^2 - \dfrac{(T_{end} - T(t)) \times C_p \times P_{ch}}{ASOC \times E_{bat}}}$$

where: $U_{avg}$: mean voltage of the battery and $T(t)$: temperature of the battery at the moment t.

10. Method for charging a battery (10) according to one of the preceding claims, **characterized in that** it comprises a step of reading of the temperature, of the state of charge and of potential other parameters characterizing the state of the battery and communication of the result to the charging device.

11. Battery charger, comprising an electrical charging device (2) which delivers a charging power ($P_{ch}$), **characterized in that** it comprises a cooling device (3), which delivers a cooling power ($P_{cool}$), an input (5) for receiving a final state of charge ($SOC_{end}$) and a final temperature ($T_{end}$) of the battery and a control unit (4) which uses the charging method according to one of Claims 1 to 10 to compute the charging power ($P_{ch}$) and/or the cooling power ($P_{cool}$) necessary for reaching the two final values ($SOC_{end}$; $T_{end}$) in a minimum time.

12. Battery charger according to the preceding claim, **characterized in that** the cooling device (3) comprises a variable flow rate and/or a variable temperature of coolant, so as to modify the cooling power as a function of the charging power.

13. Station for managing batteries for supplying power to a drive motor of a motor vehicle, **characterized in that** it comprises at least one control unit (4) which uses the charging method according to one of Claims 1 to 10.

## FIG.1

**EP 2 636 093 B1**

## RÉFÉRENCES CITÉES DANS LA DESCRIPTION

**Documents brevets cités dans la description**

- US 20090309546 A
- US 6624615 B1
- JP 2002352866 A
- JP 2006073406 A